# EUROPÄISCHE PATENTSCHRIFT

(11) **EP 3 192 397 B1**
(45) Veröffentlichungstag und Bekanntmachung des Hinweises auf die Patenterteilung: **09.01.2019**
(21) Anmeldenummer: 16150894.0
(22) Anmeldetag: 12.01.2016
(51) Int. Cl.: A47B 87/00, A47B 57/30

(54) **KONSTRUKTIONSEINHEIT ZUR BEREITSTELLUNG VON EINRICHTUNGSGEGENSTÄNDEN**
CONSTRUCTION UNIT FOR PROVIDING FURNISHING OBJECTS
UNITE DE CONSTRUCTION DESTINEE A PREPARER DES OBJETS D'AMEUBLEMENT

(43) Veröffentlichungstag der Anmeldung: 19.07.2017
(73) Patentinhaber: aldingersenner4 GmbH, 80799 München (DE)
(72) Erfinder: Senner, Simon Johannes, 80799 München (DE); Aldinger, Fanny Alexa, 80799 München (DE)
(74) Vertreter: Lucke, Andreas

(56) Entgegenhaltungen:
- DE-U1- 29 904 373
- Samuel Fausch: "Furniture system", , 6. Januar 2010 (2010-01-06), Seiten 1-5, XP055257776, Gefunden im Internet: URL:https://www.supermagnete.nl/eng/projec t301.pdf [gefunden am 2016-03-11]

## Beschreibung

### TECHNISCHES GEBIET

Die vorliegende Erfindung liegt auf dem Gebiet der Bereitstellung von Einrichtungsgegenständen und betrifft eine Konstruktionseinheit zur Bereitstellung von flexibel gestaltbaren Einrichtungsgegenständen und/oder zur Bereitstellung unterschiedlicher Einrichtungsgegenstände, ein modulares, flexibel gestaltbares System, das eine solche Konstruktionseinheit umfasst, sowie die Verwendung derselben.

### HINTERGRUND

Einrichtungsgegenstände, wie Tische, Regale, Sideboards, Betten und viele weitere, bestehen üblicherweise aus verschraubten oder anderweitig miteinander verbundenen Einzelelementen. Die Einzelelemente werden üblicherweise in einer bestimmten vordefinierten Konfiguration miteinander verbunden.

Es sind jedoch auch Einrichtungsgegenstände bekannt, deren Aufbau oder Konfiguration flexibel umgestaltet werden kann. Ein Bespiel für eine modulare Möbelstruktur ist aus der EP 1 980 175 A1 bekannt. Die Struktur umfasst Einzelelemente, welche die Form eines Blocks mit vier zusammenhängenden Flächen und zwei gegenüberliegenden offenen Seiten aufweist. Diese Einzelelemente können mithilfe von Magneten miteinander verbunden werden. Ein Magnetregal, das aus ähnlichen Einzelelementen aufgebaut ist, ist aus der DE 20 2005 002 972 U1 bekannt. Bei diesen Einzelelementen sind Magneten fest in jeweilige Flächen der Einzelelemente eingebracht.

Aus der Intemetpublikation "Furniture System" von Samuel Fausch (https://www.supermagnete.nl/eng/project301.pdf) ist ein modulares Möbelsystem bekannt, welches aus beschichteten Stahlblechen besteht, die mit Kugelmagneten zusammengehalten werden. Die Stahlbleche können geschlossene Platten oder ausgeschnittene Platten sein, sodass sich eine Rahmenform ergibt. Die Platten werden zusammengehalten, indem in der Nähe einer jeden Ecke, an der drei Platten rechtwinklig aneinander stoßen, drei kugelförmige Magnete angeordnet werden, die jeweils zwei der drei Platten zusammenziehen. Ein stabiler Möbelkörper ergibt sich nur dann, wenn sechs Platten quaderförmig angeordnet werden und in allen acht Ecken mit jeweils drei Kugelmagneten verbunden werden.

Die DE 29904373U1 offenbart ein Möbelsystem, das aus einzelnen Modulen besteht, die sowohl einzeln verwendet werden können, als auch durch Magnete miteinander verbunden werden können. Die einzelnen Module bestehen aus Gehäusen, die in eine Rahmenkonstruktion aus Holz oder Metall integriert sind. Zwei einzelne Module können miteinander verbunden werden, indem die Module mit ihren jeweiligen Magneten verbunden werden. An jedem Modul sind zu diesem Zweck an mindestens drei Seiten Magneten in einer vorbestimmten Position unverschiebbar befestigt. Anstelle der Magneten können auch Klettverbinder verwendet werden.

### ZUSAMMENFASSUNG DER ERFINDUNG

Der vorliegenden Erfindung liegt die Aufgabe zugrunde, eine Konstruktionseinheit zur Bereitstellung von flexibel gestaltbaren Einrichtungsgegenständen und/oder zur Bereitstellung unterschiedlicher Einrichtungsgegenstände zur Verfügung zu stellen, die es erlaubt, unterschiedliche Einrichtungsgegenstände schnell und einfach auf- und abzubauen sowie die jeweiligen Einrichtungsgegenstände flexibel und unkompliziert auf die jeweiligen Bedürfnisse und Anforderungen anzupassen.

Diese Aufgabe wird durch eine Konstruktionseinheit nach Anspruch 1 gelöst. Vorteilhafte Ausführungsformen und Weiterbildungen sind in den abhängigen Ansprüchen angegeben.

Die vorliegende Erfindung betrifft eine Konstruktionseinheit zur Bereitstellung von flexibel gestaltbaren Einrichtungsgegenständen und/oder zur Bereitstellung unterschiedlicher Einrichtungsgegenstände. Die Konstruktionseinheit umfasst einen Metallrahmen mit Stababschnitten, die die Kanten eines Quaders bilden, und umfasst weiterhin vier oder mehr magnetische Elemente, die jeweils mit dem Metallrahmen magnetisch verbindbar sind, wobei die magnetischen Elemente stufenlos am Metallrahmen verschiebbar sind.

Die magnetischen Elemente können verschiedene Funktionen erfüllen. Beispielsweise können Sie dazu verwendet werden, um eine Platte innerhalb des Metallrahmens zu stützen und um diese stufenlos in der Höhe zu verstellen. Damit kann die Konstruktionseinheit beispielsweise verwendet werden, um ein Regal mit stufenlos anpassbaren Fächern bereitzustellen. Die magnetischen Elemente können alternativ oder zusätzlich auch verwendet werden, um den Metallrahmen mit anderen identischen oder nicht identischen Metallrahmen zu verbinden, um zusammen mit diesen modulare Einrichtungsgegenstände bereitzustellen. Dabei sind die Metallrahmen aufgrund der magnetischen Verbindung mit der stufenlosen Verschiebbarkeit der magnetischen Elemente ebenfalls stufenlos und kontinuierlich zueinander verschiebbar. Die stufenlose Verschiebbarkeit der magnetischen Elemente gestattet - anstelle des stufenlosen Verschiebens - zusätzlich ein Trennen und erneutes Verbinden in einer anderen Position oder Anordnung. Die möglichen Positionen oder Anordnungen sind dabei - wie beim stufenlosen Verschieben - nicht vordefiniert und diskret, sondern können aus kontinuierlichen Bereichen beliebig gewählt werden. Die Metallrahmen können daher in unterschiedlichen relativen Anordnungen magnetisch miteinander verbunden werden. Dadurch können diese Einrichtungsgegenstände flexibel und einfach angepasst werden und auch flexibel und einfach zu anderen Einrichtungsgegenständen umgestaltet werden. Die Quaderform bietet eine universelle Grundform, mit der unterschiedliche Einrichtungsgegenstände mithilfe von nur einem Metallrahmen oder auch mithilfe mehrerer Metallrahmen gebildet werden können. Die Quaderform gestattet zudem eine gute Kombinierbarkeit mit anderen quaderförmigen Metallrahmen. Die Konstruktionseinheit stellt demnach eine Grundeinheit zur Bildung einer Vielzahl unterschiedlicher Einrichtungsgegenstände zur Verfügung. Dabei kann die Umgestaltung und Anpassung schnell, nach individuellen Bedürfnissen, reversibel, unkompliziert und mit geringem Aufwand vorgenommen werden, ohne dass dafür Werkzeuge erforderlich wären.

Gemäß einer bevorzugten Ausführungsform der erfindungsgemäßen Konstruktionseinheit umfassen die Stababschnitte des Metallrahmens ein Metallprofil, insbesondere ein Stahlprofil, oder sind daraus gebildet. Dies erlaubt einen einfachen, kostengünstigen und stabilen Aufbau.

Alternativ oder zusätzlich können die Stababschnitte des Metallrahmens durch ein Vierkantprofil gebildet sein. Vierkantprofile haben plane Außenflächenabschnitte. Dies gestattet ein vorteilhaftes Anbringen von magnetischen Elementen mit einer planen Außenfläche über eine plane Verbindungs- bzw. Kontaktfläche.

Alternativ oder zusätzlich kann der Metallrahmen aus den Stababschnitten gebildet sein und/oder können die Stababschnitte starr miteinander verbunden sein. Dies gestattet eine stabile und steife Konstruktion. Diese Konstruktion erfordert nur wenig Material, da der Rahmen lediglich Stababschnitte umfassen kann. Das Innere des Metallrahmens ist von allen Seiten zugänglich. Dies ist vorteilhaft für eine vielseitige Einsetzbarkeit.

In einer oder in mehreren der vorgenannten Ausführungsformen liegt eine Tiefe des Metallrahmens im Bereich von 16 cm bis 60 cm, vorzugsweise im Bereich von 24 cm bis 50 cm, insbesondere im Bereich von 30 cm bis 42 cm und/oder liegt eine Breite des Metallrahmens im Bereich von 34 cm bis 150 cm, vorzugsweise im Bereich von 50 cm bis 115 cm, insbesondere im Bereich von 64 cm bis 80 cm und/oder liegt eine Höhe des Metallrahmens im Bereich von 34 cm bis 160 cm, vorzugsweise im Bereich von 52 cm bis 125 cm, insbesondere im Bereich von 70 cm bis 86 cm. Diese Abmessungen sind besonders vorteilhaft für die Bereitstellung von Einrichtungsgegenständen, weil sie ergonomisch sind und weil Einrichtungsgegenstände mit üblichen Möbelmaßen bereitgestellt werden können.

In einer oder in mehreren der vorgenannten Ausführungsformen beträgt eine Breite des Metallrahmens das Zweifache einer Tiefe des Metallrahmens. Dadurch kann der Metallrahmen besonders gut mit anderen identischen Metallrahmen kombiniert werden.

Eine Breite und/oder eine Höhe des Metallrahmens kann auch jeweils ein ganzzahliges Vielfaches der Hälfte einer Tiefe des Metallrahmens betragen. Dadurch kann der Metallrahmen vorteilhaft mit anderen Metallrahmen mit anderen Abmessungen, von denen eine oder mehrere ebenfalls ein ganzzahliges Vielfaches der genannten Hälfte der Tiefe des Metallrahmens betragen, kombiniert werden.

In einer oder in mehreren der vorgenannten Ausführungsformen umfassen die magnetischen Elemente jeweils einen oder mehrere Magneten, vorzugsweise Neodym-Magneten, oder bestehen jeweils aus einem oder mehreren Magneten, vorzugsweise aus einem oder mehreren Neodym-Magneten. Dies gestattet einen einfachen Aufbau. Neodym ist ein starkes Magnetmaterial und gut erhältlich.

In einer oder in mehreren der vorgenannten Ausführungsformen umfassen mindestens vier der vier oder mehr magnetischen Elemente jeweils einen Magneten mit einer Dicke in einem Bereich von 3 mm bis 20 mm, vorzugsweise mit einer Dicke von 4 mm bis 10 mm, oder bestehen daraus. Magnete mit solchen Dicken können verwendet werden, um ausreichend starke magnetische Verbindungen herstellen, mit deren Hilfe eine Einlegeplatte innerhalb des Metallrahmens sicher gestützt und gehalten werden kann. Solche Magnete können auch vorteilhaft als Füße oder Bodenkontaktelemente für Einrichtungsgegenstände verwendet werden.

Alternativ oder zusätzlich können mindestens vier der vier oder mehr magnetischen Elemente jeweils einen Magneten mit einer Dicke in einem Bereich von 3 mm bis 20 mm, vorzugsweise mit einer Dicke von 4 mm bis 7 mm, umfassen oder aus diesem bestehen. Magnete mit solchen Dicken können ausreichend starke magnetische Verbindungen herstellen, um verschiedene Metallrahmen ausreichend stark miteinander zu verbinden. Dadurch ist es möglich, das magnetische Elemente, die zu unterschiedlichen Zwecken eingesetzt werden, etwa zum Stützen von Einlegeplatten einerseits und zum Verbinden von Metallrahmen andererseits oder aber als Fuß- bzw. Bodenkontaktelemente, unterschiedliche Dicke aufweisen, auch wenn es möglich ist, dass Sie aus demselben Dickenbereich gewählt werden. Es ist aber auch möglich, dass magnetische Elemente, die zu unterschiedlichen Zwecken eingesetzt werden, wobei die Zwecke ein Stützen von Einlegeplatten und ein Verbinden von Metallrahmen und/oder eine Verwendung als Fuß- bzw. Bodenkontaktelement umfassen können, dieselben Dicken aufweisen. Wenn zum Verbinden von Metallrahmen magnetische Elemente mit geringen Dicken verwendet werden, dann haben die verbundenen Metallrahmen einen vorteilhaft geringen Abstand. Es ist zu beachten, dass die Erfindung auch solche Ausführungsformen umfasst, bei denen vier oder mehr der magnetischen Elemente eine größere Dicke aufweisen als vier, acht, zwölf oder mehr andere der magnetischen Elemente. Solche Ausführungsformen haben acht, zwölf, 16 bzw. mehr magnetische Elemente.

In einer oder in mehreren der vorgenannten Ausführungsformen entspricht eine Breite und/oder eine Tiefe der magnetischen Elemente einer Querabmessung eines oder mehrerer der Stababschnitte. Dies gestattet ein passendes und bündiges Befestigen am Metallrahmen und eine effektive magnetische Verbindbarkeit.

In einer oder in mehreren der vorgenannten Ausführungsformen weisen mindestens vier der magnetischen Elemente eine erste Beschichtung auf, die ein Verschieben am Metallrahmen erschwert, wobei die erste Beschichtung vorzugsweise durch Kautschuk und/oder Gummiabschnitte gebildet wird. Durch die Beschichtung kann die Haftreibung erhöht werden, so dass ein Verrutschen am Rahmen verhindert werden kann bzw. erst bei einer höheren Belastung erfolgt. Dadurch kann die Stützkraft der magnetischen Elemente vergrößert werden, wenn diese zum Stützen, beispielsweise zum Stützen einer Einlegeplatte verwendet werden.

Alternativ oder zusätzlich können mindestens vier der magnetischen Elemente eine zweite Beschichtung aufweisen, die geeignet ist ein Zerkratzen zu verhindern oder zu reduzieren, wobei die zweite Beschichtung vorzugsweise durch Filz- und/oder Korkabschnitte gebildet wird. Dies können dieselben oder teilweise dieselben magnetischen Elemente sein, welche die erste Beschichtung aufweisen, oder es können andere bzw. teilweise andere magnetische Elemente sein. Dasselbe magnetische Element kann nur eine Beschichtungen oder auch zwei oder mehr unterschiedliche Beschichtungen aus unterschiedlichen jeweiligen Materialen aufweisen. Die zweite Beschichtung kann vorteilhaft als Bodenkontakt verwendet werden und verhindern, dass empfindliche Böden, wie Parkettböden, zerkratzt werden. Die zweite Beschichtung kann ein schonendes, leichtes und leises Verschieben der jeweiligen Einrichtungsgegenstände ermöglichen.

In einer oder in mehreren der vorgenannten Ausführungsformen umfassen die genannten mindestens vier der magnetischen Elemente mit der ersten Beschichtung weiterhin eine seitlich an die erste Beschichtung angrenzende Abscherungs-Sperre, die vorzugsweise durch einen weiteren Magneten gebildet wird. Die Abscherungs-Sperre kann verhindern, dass die ersten Beschichtung vom übrigen Teil des magnetischen Elementes unter einer bestimmten Last abgeschert oder abgetrennt wird. Damit kann die Haltbarkeit unter Belastung und die Zuverlässigkeit verbessert werden.

Die Konstruktionseinheit umfasst weiterhin eine oder mehrere Platten, die jeweils so bemessen sind, dass sie jeweils parallel zu mindestens einer der drei Seitenebenen des Quaders in den Metallrahmen eingebracht werden können und jeweils mithilfe von vier der magnetischen Elemente, wenn diese an entsprechenden Positionen jeweils mit einem der Stababschnitte magnetisch verbunden sind, gegen die Schwerkraft gestützt werden können. Mithilfe dieser Platten oder Einlegeplatten können Regalfächer zur Verfügung gestellt werden. Die Platten sind innerhalb des Metallrahmens stufenlos höhenverstellbar, so dass die Regalfächer kontinuierlich und entsprechend der individuellen Bedürfnisse des Nutzers anpassbar sind.

Gemäß einer erfindungsgemäßen Weiterbildung kann die Konstruktionseinheit weiterhin eine rechteckige Platte mit der Fläche in der Größe einer Seitenfläche des durch den Metallrahmen gebildeten Quaders umfassen, wobei Magnete an solchen Positionen in die Platte integriert sind, dass die Platte magnetisch am Metallrahmen befestigt ist, wenn die Platte an der genannten Seitenfläche anliegt und mit dieser fluchtet. Die rechteckige Platte kann als Abdeckplatte eines Einrichtungsgegenstands, beispielsweise eines Regals, dienen oder kann als Tischplatte dienen. Sie kann auch als Verbindungsplatte dienen, um verschiedene Metallrahmen miteinander zu verbinden.

In einer oder in mehreren der vorgenannten Ausführungsformen umfasst die Konstruktionseinheit weiterhin Rollen, die magnetisch an dem Metallrahmen angebracht werden können und die geeignet sind, die Konstruktionseinheit über ein Rollen zu bewegen. Dadurch kann beispielsweise ein Teewagen oder Rolltisch bereitgestellt werden.

Die vorliegende Erfindung betrifft weiterhin ein modulares, flexibel gestaltbares System. Das System umfasst eine erfindungsgemäße Konstruktionseinheit nach einer oder mehrerer der vorgenannten Ausführungsformen sowie ein oder mehrere weitere Metallrahmen mit jeweiligen Stababschnitten, die jeweils die Kanten jeweiliger Quader bilden, wobei die Metallrahmen des Systems jeweils eine Breite, eine Höhe und/oder eine Tiefe haben, die jeweils ein ganzzahliges Vielfaches der Hälfte der Tiefe eines der Metallrahmen betragen. Solche Metallrahmen können flexibel und einfach in verschiedenen relativen Anordnungen jeweils mithilfe von vier der magnetischen Elemente miteinander kombiniert werden bzw. mit Hilfe der magnetischen Elemente magnetisch miteinander verbunden werden. Die Metallrahmen, wenn sie untereinander magnetisch verbunden sind, können stufenlos gegeneinander verschoben werden. Dadurch können eine Vielzahl unterschiedlicher Einrichtungsgegenstände zur Verfügung gestellt werden, die individuell und einfach anpassbar sind und in ihrer Gestalt veränderbar sind.

Da das System eine erfindungsgemäße Konstruktionseinheit umfasst, umfasst es auch vier oder mehr magnetische Elemente. Dabei ist zu beachten, dass das modulare System, insbesondere in Abhängigkeit der Anzahl der Metallrahmen, wesentlich mehr als vier magnetische Elemente umfassen kann. Beispielsweise kann das System für jede Metallrahmenverbindung jeweils vier magnetische Elemente umfassen. Bei drei Metallrahmen wären das acht magnetische Elemente. Weiterhin kann das System für jeden Metallrahmen jeweils zusätzliche vier, acht, zwölf magnetische Elemente oder noch mehr magnetische Elemente, in einer Anzahl, die einem Vielfachen von vier entspricht, umfassen, um die Möglichkeit zu haben, mit jeweils vier magnetischen Elementen eine Einlegeplatte innerhalb eines Metallrahmens zu stützten. Daneben können noch weitere magnetische Elemente vorhanden sein, vorzugsweise mindestens vier für jeden Metallrahmen, der einen Bodenkontakt haben soll, die als Fußelemente dienen können.

In einer vorteilhaften Ausführungsform des Systems weisen die Metallrahmen dieselben Abmessungen auf. Die Metallrahmen können also identisch sein und die Einrichtungsgegenstände mit Hilfe identischer oder teilweise identischer Konstruktionseinheiten, die sich durch ihre magnetischen Elemente unterscheiden, gebildet werden. Die ist vorteilhaft für die Kompatibilität, da wahlweise verschiedene modulare oder mehrere verschiedene nicht modulare Einrichtungsgegenstände unter Verwendung von nur einer Grundeinheit - anstatt mehrerer verschiedener Grundeinheiten - gebildet werden können.

Die vorliegende Erfindung betrifft zudem auch eine Verwendung einer erfindungsgemäßen Konstruktionseinheit nach einer oder mehrerer der vorgenannten Ausführungsformen oder eines erfindungsgemäßen Systems nach einer oder mehrerer der vorgenannten Ausführungsformen als Einrichtungsgegenstand, wobei mindestens vier der magnetischen Elemente verwendet werden, um eine Platte innerhalb eines der Metallrahmen zu stützen, die über ein verschieben der stützenden magnetischen Elemente stufenlos höhenverstellbar ist, und/oder wobei mindestens vier andere der magnetischen Elemente verwendet werden, um zwei der Metallrahmen trennbar miteinander zu verbinden, wobei die Metallrahmen, wenn sie verbunden sind, stufenlos gegeneinander verschoben werden können.

### KURZBESCHREIBUNG DER FIGUREN

Weitere Vorteile und Merkmale ergeben sich aus der folgenden Beschreibung, in der beispielhafte Ausführungsformen anhand der beigefügten Figuren näher erläutert werden. In den Figuren werden gleiche Merkmale mit gleichen Bezugszeichen bezeichnet.
- Fig. 1: zeigt einen Metallrahmen einer erfindungsgemäßen Konstruktionseinheit gemäß einer Ausführungsform.
- Fig. 2-7: zeigen Konstruktionseinheiten gemäß verschiedener erfindungsgemäßer Ausführungsformen.
- Fig. 8a, b: zeigen ein modulares System gemäß einer erfindungsgemäßen Ausführungsform.
- Fig. 9 u. 10: zeigen magnetische Elemente gemäß verschiedener erfindungsgemäßer Ausführungsformen.
- Fig. 11-13: zeigen modulare Systeme gemäß weiterer erfindungsgemäßer Ausführungsformen.

### AUSFÜHRLICHE BESCHREIBUNG BEISPIELHAFTER AUSFÜHRUNGSFORMEN

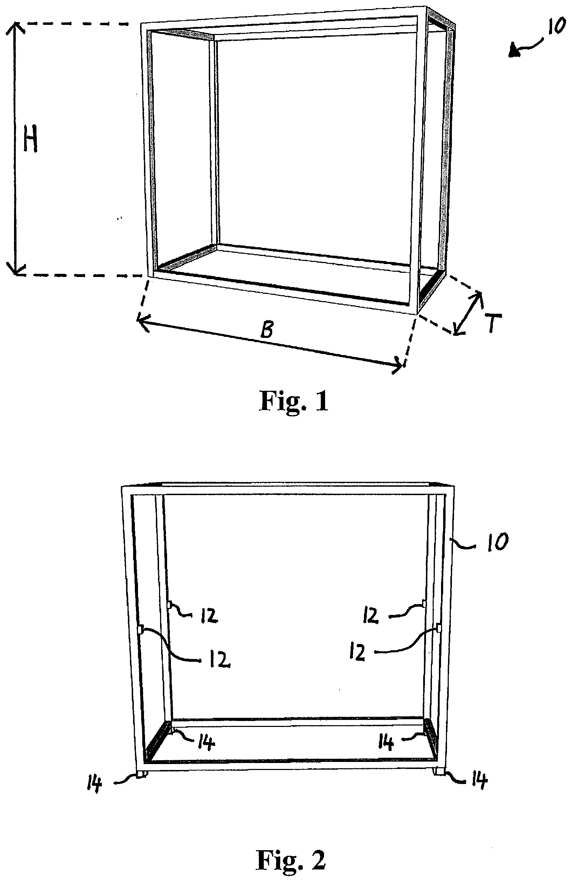

Fig. 1 zeigt einen Metallrahmen 10 für eine erfindungsgemäße Konstruktionseinheit. Der Metallrahmen 10 wird durch zwölf Stababschnitte gebildet, welche die Kanten eines Quaders bilden. Die Stababschnitte sind starr miteinander verbunden, beispielsweise mittels jeweiliger Schweißverbindungen. Der Quader hat eine Tiefe T, eine Breite B und eine Höhe H. In einer beispielhaften und vorteilhaften Ausführungsform beträgt die Tiefe 36 cm, die Höhe 72 cm und die Breite 78 cm. In anderen Ausführungsformen kann der Quader andere Abmessungen haben.

In einer beispielhaften Ausführungsform werden die Stababschnitte durch ein Vierkant-Hohlprofil gebildet, dass einen quadratischen Querschnitt aufweist, dessen Seitenlänge 20 mm beträgt. Die Kanten des Hohlprofils können abgerundet sein, so dass der Querschnitt nicht exakt quadratisch sein muss, sondern abgerundete Ecken aufweisen kann. In einer beispielshaften Ausführungsform besteht das Vierkant-Hohlprofil aus Stahl und hat eine Wandstärke von 2 mm. Ein solches Vierkant-Hohlprofil hat ebene Außenflächen mit einer Querabmessung von 20 mm, die besonders vorteilhaft für Verbindungen mit Magneten, die eine quadratische oder rechteckige Außenfläche mit einer Seitenlänge von 20 mm aufweisen, verwendet werden können. In anderen Ausführungsformen kann der Metallrahmen aus anderen metallischen Materialien bestehen, die ebenfalls magnetisch sind, und/oder kann das Profil andere Abmessungen haben, massiv sein und/oder anders gestaltet sein.

Fig. 2 zeigt eine Konstruktionseinheit gemäß einer erfindungsgemäßen Ausführungsform, die den Metallrahmen 10 der Fig. 1 umfasst und die weiterhin acht magnetische Elemente, nämlich vier erste magnetische Elemente 12 und vier zweite magnetische Elemente 14 umfasst. Die ersten und zweiten magnetischen Elemente 12 und 14 sind magnetisch mit dem Metallrahmen 10 verbindbar und können stufenlos und kontinuierlich am Metallrahmen 10 verschoben werden. Die ersten magnetischen Elemente 12 sind in der Ausführungsform der Fig. 2 in gleicher Höhe an einem zugehörigen von vier parallelen Stababschnitten angeordnet und können dazu verwendet werden, eine Platte (nicht gezeigt) innerhalb des Metallrahmens 10 zu stützen. Die Platte kann als Ablage für verschiedene Gegenstände genutzt werden und über ein Verschieben der ersten magnetischen Elemente 12 stufenlos höhenverstellt werden.

Die zweiten magnetischen Elemente 14 sind an der Unterseite des hochkant aufgestellten Metallrahmens 10 im Bereich von jeweiligen Ecken des Quaders angeordnet. Die zweiten magnetischen Elemente 14 können an ihrer Unterseite, die dem Metallrahmen 10 abgewandt ist, eine Beschichtung aufweisen, die ein Zerkratzen eines empfindlichen Bodenbelags beim Verschieben der Konstruktionseinheit verhindert oder zumindest das Risiko eines Zerkratzens vermindert. Eine solche Beschichtung kann beispielsweise aus Filz oder Kork bestehen.

Die stufenlose Verschiebbarkeit der magnetischen Elemente 12, 14 am Metallrahmen 10 gestattet auch ein Trennen und erneutes Verbinden in einer anderen Position am Metallrahmen 10. Die möglichen Positionen sind dabei - wie beim stufenlosen Verschieben - nicht vordefiniert und diskret, sondern können aus kontinuierlichen Bereichen beliebig gewählt werden.

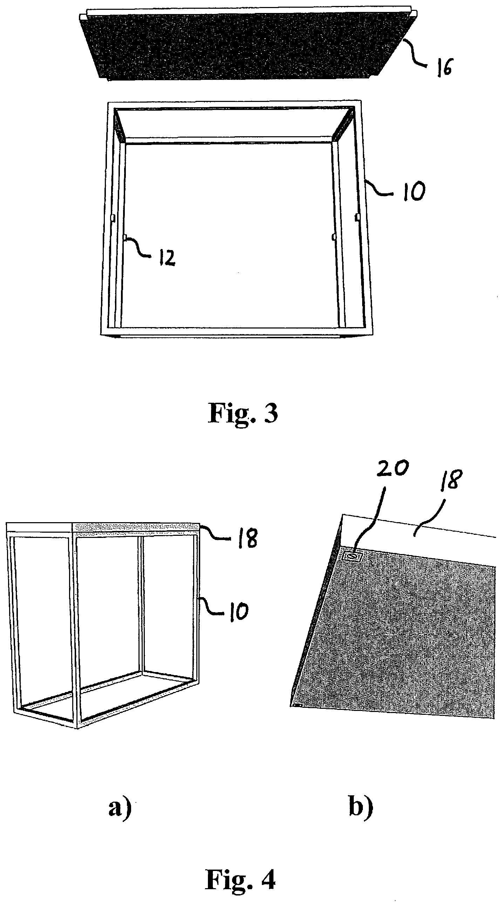

Fig. 3 zeigt eine Konstruktionseinheit gemäß einer weiteren Ausführungsform, die weiterhin eine Einlegeplatte 16 umfasst, die so bemessen ist, dass sie parallel zu einer Seitenfläche des Quaders, der durch den Metallrahmen 10 gebildet wird, in den Metallrahmen 10 eingebracht werden kann und in einer solche Position von den ersten magnetischen Elementen 12 innerhalb des Metallrahmens 10 gehalten bzw. gestützt werden kann. In der Ausführungsform der Fig. 3 hat die Einlegeplatte 16 eine nahezu rechteckige Form mit Seitenlängen, die der Breite B und der Tiefe T des Metallrahmens 10 entsprechen, wobei die Form der Einlegeplatte 16 lediglich durch Aussparungen an den Ecken von einer reinen Rechteckform abweicht. Die Aussparungen entsprechen im Wesentlichen dem Querschnitt der Stababschnitte, sodass die Einlegeplatte 16 parallel zu den Seitenflächen des Quaders, der durch den Metallrahmen 10 gebildet wird, in den Metallrahmen 10 eingelegt werden kann.

In anderen Ausführungsformen kann die Einlegeplatte 16 andere nahezu rechteckige Abmessungen aufweisen, sodass sie parallel zu anderen Seitenflächen des Quaders, der durch den Metallrahmen 10 gebildet wird, in den Metallrahmen 10 eingelegt werden kann. Eine Einlegeplatte 16 kann auch als Boden diesen, und so in den Metallrahmen 10 eingelegt werden, dass sie auf vier seiner Stababschnitte aufliegt.

In einigen Ausführungsformen hat die Einlegeplatte 16 eine Fläche, die der Breite mal der Höhe B x H abzüglich der Fläche der Aussparungen entspricht. In anderen Ausführungsformen hat die Einlegeplatte 16 eine Fläche, die der Tiefe mal der Höhe T x H des Metallrahmens 10 abzüglich der Fläche der vier Aussparungen entspricht. Alle dies Ausführungsformen mit den unterschiedlichen Einlegeplatten 16 können denselben Metallrahmen 10 und dieselben ersten magnetischen Elemente 12 umfassen. Demnach können der Metallrahmen 10 und die ersten magnetischen Elemente 12 verwendet werden, um unterschiedliche Einrichtungsgegenstände zur Ablagemöglichkeit bereitzustellen, bei denen der Metallrahmen 10 jeweils hochkant, seitkant oder flach auf dem Boden aufliegen kann. In diesen unterschiedlichen Einrichtungsgegenständen kann die jeweils zugehörige Einlegeplatte 16 jeweils parallel zum Boden innerhalb des Metallrahmens 10 durch die ersten magnetischen Elemente 12 gestützt sein. Die jeweils zugehörige Einlegeplatte 16 kann dabei stufenlos höhenverstellbar sein.

Fig. 4a zeigt eine weitere Ausführungsform einer erfindungsgemäßen Konstruktionseinheit, die eine rechteckige Platte 18 mit integrierten Magneten umfasst, wobei in Fig. 4a keine magnetischen Elemente gezeigt sind. Die rechteckige Platte 18 entspricht einer Seitenfläche des Quaders, der durch den Metallrahmen 10 gebildet ist, sodass die rechteckige Platte 18 fluchtend mit dem Metallrahmen 10 auf jede der beiden entsprechenden Seiten des Metallrahmens 10, die einander gegenüberliegen, aufgelegt werden kann.

Fig. 4b zeigt eine Detailansicht eines Abschnitts der rechteckigen Platte 18. Die vier Eckbereiche der rechteckigen Platte 18 beinhalten Magnete 20, die in die rechteckige Platte 18 integriert sind. Dadurch ist die rechteckige Platte 18 mit dem Metallrahmen 10 magnetisch verbunden, wenn sie fluchtend auf eine entsprechende Seite des Metallrahmens 10 aufgelegt wird, sodass die Platte gegen ein Verrutschen oder Verschieben gesichert ist. Zudem kann die Platte nicht nur, wie in Fig. 4a gezeigt ist, als Abdeckplatte verwendet werden, sondern auch als Verbindungsplatte, um zwei Metallrahmen 10, die gleich große Seitenflächen haben, magnetisch miteinander zu verbinden. Dazu wird die rechteckige Platte 18 fluchtend auf einen ersten Metallrahmen 10 aufgelegt und ein zweiter Metallrahmen 10 fluchtend auf die rechteckige Platte 18 aufgesetzt. Die integrierten Magneten 20 können jeweils mit beiden Metallrahmen 10 wechselwirken und diese dadurch miteinander verbinden bzw. gegen ein Verschieben oder Verrutschen sichern. Die Konstruktionseinheit der Fig. 4a bildet in der dargestellten Konfiguration einen Einrichtungsgegenstand, der als Ablage oder Beistelltisch verwendet werden kann.

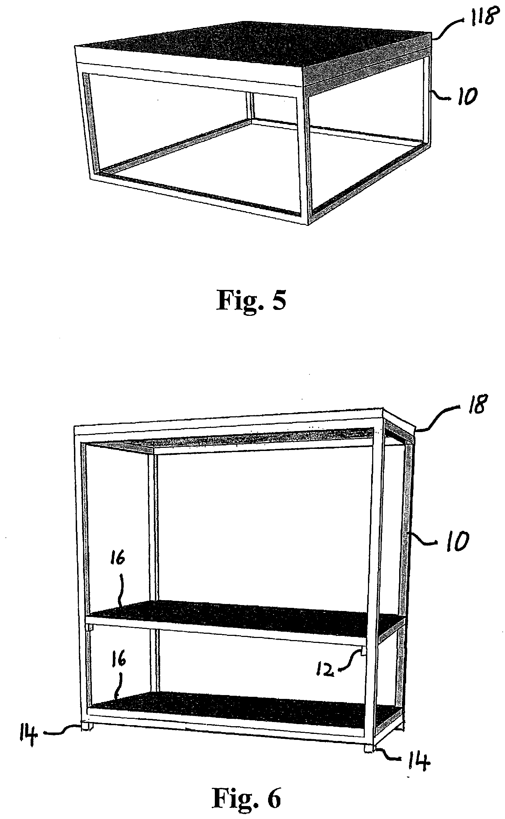

Fig. 5 zeigt eine weitere erfindungsgemäße Konstruktionseinheit, die denselben Rahmen 10 wie die Ausführungsformen der Fig. 4a umfasst, die jedoch eine rechteckige Platte 118 mit anderen Abmessungen umfasst, die sich teilweise von den Abmessungen der rechteckigen Platte 18 unterscheiden. Die rechteckige Platte 118 hat Seitenlängen, die der Breite B und der Höhe H des Metallrahmens 10 entsprechen. Dadurch kann die rechteckige Platte 118 fluchtend auf eine Oberseite des Metallrahmens 10 aufgelegt werden, wenn dieser flach auf dem Boden liegt. Demnach kann die Konstruktionseinheit der Fig. 5 in der dargestellten Konfiguration einen Einrichtungsgegenstand bereitstellen, der beispielsweise als Sofatisch verwendet kann.

Fig. 6 zeigt eine Konstruktionseinheit gemäß einer weiteren Ausführungsform, die den Metallrahmen 10, zwei der Einlegeplatten 16, die rechteckige Platte 18, vier erste magnetische Elemente 12 sowie vier zweite magnetische Elemente 14 umfasst. Wie in der Fig. 6 dargestellt ist, können diese Elemente derart zueinander angeordnet bzw. konfiguriert werden, dass ein kleines Regal bzw. Sideboard bereitgestellt wird. Dieses in Fig. 6 dargestellte durch die Konstruktionseinheit bereitgestellte Sideboard umfasst drei Ablageflächen, welche durch die oberste rechteckige Platte 18, durch die darunter angeordnete obere Einlegeplatte 16 und durch die darunter angeordnete Einlegeplatte 16 bereitgestellt werden. Die obere Einlegeplatte 16 ist durch die ersten magnetischen Elemente 12 gestützt und ist stufenlos innerhalb des Metallrahmens 10 höhenverstellbar. Dadurch können die Regalabschnitte flexibel und schnell auf einen jeweiligen Bedarf angepasst werden, ohne dass dazu ein vergleichsweise aufwendiges Lösen und Herstellen von Verbindungen, beispielsweise Schraubverbindungen, an diskret beanstandeten und vordefinierten Positionen erforderlich wäre. Zudem ist es möglich, flexibel und schnell die beiden Einlegeplatten 16 und die ersten Magnete 12 zu entfernen, um beispielsweise die Konfiguration bzw. Ausführungsform der Fig. 4a zu erhalten. Eine Umgestaltung der Ausführungsform der Fig. 6 zur Ausführungsform der Fig. 5 unter Beibehaltung desselben Metallrahmens 10 und unter einem Austausch der Platte 18 gegen die Paltte 118 ist ebenso schnell und unkompliziert möglich.

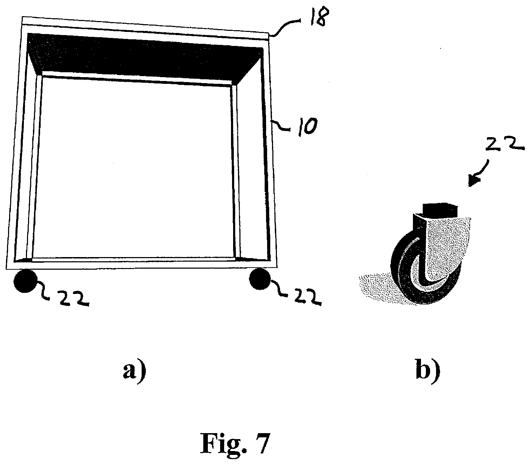

Fig. 7a zeigt eine weitere Ausführungsform einer erfindungsgemäßen Konstruktionseinheit, die derjenigen der Fig. 4a ähnelt, die jedoch zusätzlich Rollen 22 umfasst. In Fig. 7b ist eine der Rollen 22 im Detail dargestellt. Die Rollen 22 umfassen einen Magneten, sodass sie magnetisch mit dem Metallrahmen 10 verbunden werden können. In der Anordnung der Fig. 7a sind die Rollen 22 auf der Unterseite des Metallrahmens 10, die der Oberseite, die fluchtend bzw. bündig mit der rechteckigen Platte 18 bedeckt ist, gegenüberliegt. Die Konstruktionseinheit der Fig. 7a ist demnach in der dargestellten Konfiguration geeignet, einen Teewagen bereitzustellen, wobei dieser einfach und unkompliziert in die Ausführungsform der Fig. 4a überführt werden kann, indem die Rollen 22 entfernt werden, und umgekehrt.

In anderen nicht gezeigten Ausführungsformen sind innerhalb des bereitgestellten Teewagens noch eine oder mehrere durch erste magnetische Elemente 12 gestützte Einlegeplatten 16 vorhanden.

Wie anhand der Beispiele der Figuren 4 bis 7 zu erkennen ist, kann die Konstruktionseinheit als Grundbaustein verwendet werden, um verschiedenartige Einrichtungsgegenstände bereitzustellen, beispielsweise einen Tisch (Fig. 4a), einen Sofatisch (Fig. 5), ein Sideboard (Fig. 6) oder einen Teewagen (Fig. 7a), wobei jeweils nur wenige Elemente entfernt oder hinzugefügt werden müssen und derselbe Metallrahmen 10 verwendet werden kann. Dabei können die magnetischen Elemente beispielsweise als Füße (wie die magnetischen Elemente 14 in Figur 2) und/oder zum Stützen einer höhenverstellbaren Einlegeplatte (wie die magnetischen Elemente 12 in Figur 6) verwendet werden, wobei diese Möglichkeiten in den Figuren 4, 5 und 7 nicht gezeigt sind. Die Umgestaltung kann innerhalb kürzester Zeit erfolgen, ohne dass irgendein Werkzeug für den Umbau erforderlich wäre. Mithilfe der ersten magnetischen Elemente 12 ist eine stufenlose Höhenverstellbarkeit einer Einlegeplatte 16 möglich, sodass Regalfachabstände kontinuierlich verstellt werden können und präzise an die abzustellenden Gegenstände angepasst werden können. Mit herkömmlichen Regalen, welche üblicherweise vorgefertigte Bohrungen oder vordefinierte Positionen für die Regalbretthöhe vorsieht, ist dies nicht möglich.

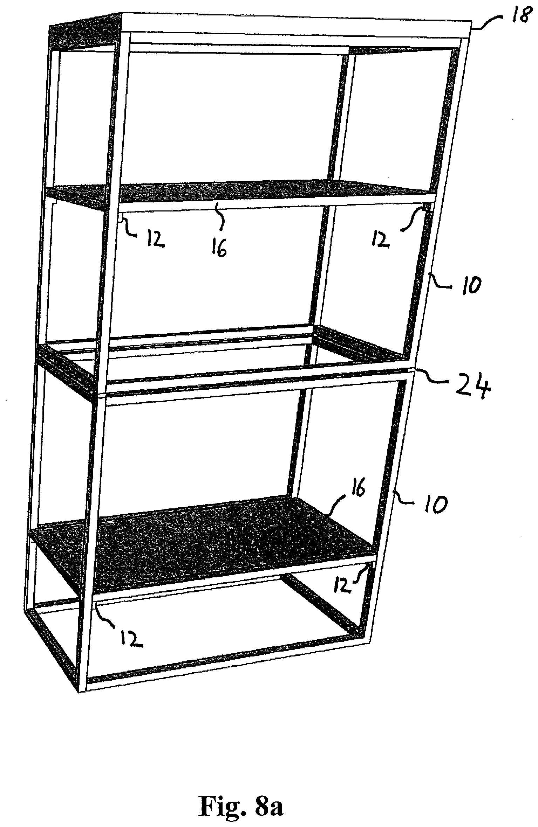

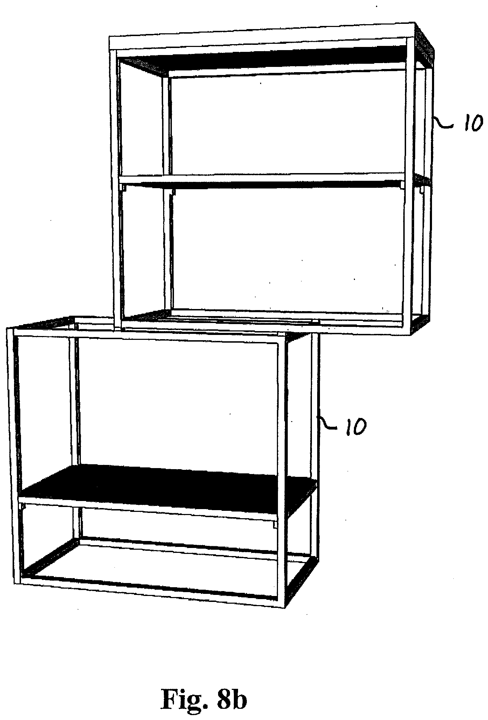

Die Figuren 8a und 8b zeigen ein modulares System mit zwei identischen Metallrahmen 10, mit acht ersten magnetischen Elementen 12, mit zwei Einlegeplatten 16, mit einer rechteckigen Platte 18 und mit vier dritten magnetischen Elementen 24. In der Konfiguration der Fig. 8a sind die beiden Metallrahmen 10 jeweils hochkant angeordnet und fluchtend übereinander gestapelt, wobei die Metallrahmen 10 mithilfe der dritten magnetischen Elemente 24 magnetisch miteinander verbunden sind.

In der Anordnung der Figur 8a sind die vier dritten magnetischen Elemente 24 in den Ecken der oberen Seitenfläche des unteren Metallrahmens und gleichzeitig in den Ecken der unteren Seitenfläche bzw. der nach unten weisenden Seitenfläche des oberen Metallrahmens 10 angeordnet. Innerhalb des oberen Metallrahmens 10 und innerhalb des unteren Metallrahmens 10 ist jeweils eine Einlegeplatte 16 parallel zum Boden angeordnet und mithilfe von jeweiligen ersten magnetischen Elementen 12 gestützt. Auf der nach oben weisenden Seitenfläche des oberen Metallrahmens 10 ist die rechteckige Platte 18 angeordnet. Das modulare System der Fig. 8a stellt in der dargestellten Konfiguration einen Einrichtungsgegenstand bereit, der als Regal, beispielsweise als Bücherregal, dienen kann.

Zwar sind der obere und der untere Metallrahmen 10 mithilfe der dritten magnetischen Elemente 24 miteinander verbunden, sodass die Metallrahmen 10 in gewissem Maße gegen ein Verschieben gesichert sind. Allerdings ist es möglich, die Magnetverbindung zu lösen und in einer anderen Anordnung wiederherzustellen oder mithilfe eines Verschiebens eine andere Anordnung herzustellen, wobei für das Verschieben oder Lösen eine vorbestimmte Sicherungskraft bzw. Verbindungskraft überwunden werden muss.

Fig. 8b zeigt das modulare System der Fig. 8a in einer anderen Konfiguration, in der die beiden Metallrahmen 10 nicht fluchtend übereinander angeordnet sind, sondern seitlich gegeneinander verschoben oder versetzt sind. Wie anhand der Fig. 8b zu erkennen ist, nimmt der durch das modulare System bereitgestellte Einrichtungsgegenstand damit eine andere Gestalt an, kann aber weiterhin als Regal verwendet werden. Aufgrund der magnetischen Verbindung mithilfe der dritten magnetischen Elemente 24 kann die Gestalt bzw. Konfiguration kontinuierlich verändert werden. Die Metallrahmen 10 können anstatt übereinander auch nebeneinander angeordnet werden und dabei magnetisch verbunden sein.

Das modulare System bietet dadurch die Möglichkeit ganz unterschiedliche Einrichtungsgegenstände bereitzustellen und die Gestalt von bestimmten Einrichtungsgegenständen flexibel und kontinuierlich abzuwandeln.

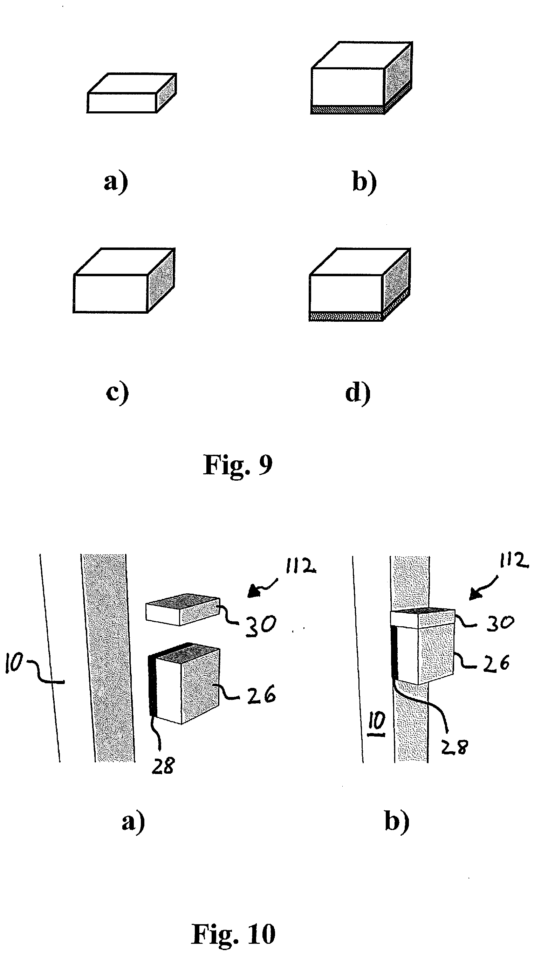

Die Figuren 9a bis 9d zeigen verschiedene magnetische Elemente gemäß unterschiedlicher erfindungsgemäßer Ausführungsformen.

Das magnetische Element der Fig. 9a besteht aus einem quaderförmigen Magneten mit einer Grundfläche von 20 x 20 mm und einer Dicke von 5 mm. Vorzugsweise wird das magnetische Element der Fig. 9a in Kombination mit einem Metallrahmen 10 verwendet, der ein Vierkantprofil mit einem quadratischen Querschnitt mit einer Seitenlänge von 20 mm umfasst. Die Dicke von 5 mm ist vorteilhaft für eine Verbindung von zwei Metallrahmen 10 untereinander, weil ein solcher Magnet ausreichend stark sein kann, die Metallrahmen 10 mithilfe von vier oder mehr solcher Magnet ausreichend gegen ein Verschieben zu sichern. In einer bevorzugten Ausführungsform besteht der Magnet der Fig. 9a aus Neodym und dient als drittes magnetisches Element 24. Da das magnetische Element der Fig. 9a vergleichsweise dünn ist, können mit diesem magnetischen Element die Metallrahmen 10 dichter aneinander angeordnet sein, wenn sie miteinander magnetisch verbunden sind.

Das magnetische Element der Fig. 9c besteht aus einem quaderförmigen Magneten mit einer Grundfläche von 20 x 20 mm und einer Dicke von 10 mm und wird vorzugsweise als erstes magnetisches Element 12 verwendet, das für eine stufenlose Höhenverstellbarkeit und zum Stützen einer jeweiligen Einlegeplatte 16 verwendet werden kann. Aufgrund der größeren Dicke im Vergleich zum magnetischen Element der Fig. 9a ist das magnetische Element der Fig. 9c stärker und bietet damit eine größere Stützkraft.

Die magnetischen Elemente der Figuren 9b und 9d umfassen jeweils den Magneten der Fig. 9c, an den jeweils eine Beschichtung angebracht ist, die ein Zerkratzen verhindert oder erschwert und die in den Figuren 9b und 9d jeweils nach unten weist. In der Fig. 9b besteht diese Beschichtung aus Kork und in der Fig. 9d besteht diese Beschichtung aus Filz. Die magnetischen Elemente der Figuren 9b und 9d eignen sich daher besonders gut als zweite magnetische Elemente 14, die als Füße unterhalb des Metallrahmens 10 angebracht werden können, um mit der Beschichtung auf dem Boden aufzuliegen. Aufgrund der Beschichtung wird der Boden geschont und bei einem Verschieben der Konstruktionseinheit vor einem Zerkratzen bewahrt. Dies ist besonders vorteilhaft bei empfindlichen Böden, beispielsweise bei Parkettböden. In anderen Ausführungsformen haben die Magneten, auf denen eine solche Beschichtung gegen ein Zerkratzen aufgebracht ist, andere Dicken.

Die Figuren 10a und 10b zeigen ein erstes magnetisches Element 112 gemäß einer weiteren Ausführungsform, das zur stufenlosen Höhenverstellung einer Einlegeplatte 16 geeignet ist. Das erste magnetische Element 112 umfasst einen ersten Magneten 26, eine Beschichtung 28, die ein Verschieben am Metallrahmen 10 erschwert, und einen zweiten Magneten 30. Die Beschichtung 28 ist auf dem ersten Magneten 26 angebracht. In Figur 10b ist der zweite Magnet 30 auf benachbarten Seiten des ersten Magneten 26 und der Beschichtung 28 fluchtend bzw. bündig angeordnet und steht mit ersten Magneten 26 in anziehendem magnetischen Kontakt, sodass die Magnete 26, 30 und die Beschichtung 28 gemeinsam einen Quader bilden.

Wenn das erste magnetische Element 112 am Metallrahmen 10 magnetisch angebracht ist, wie in Fig. 10b gezeigt ist, befindet sich die Beschichtung 28 zwischen dem ersten Magneten 26 und dem Metallrahmen 10. Die Beschichtung 28 besteht aus einem Material, das die Haftreibung zwischen dem ersten magnetischen Element 112 und dem Metallrahmen 10 vergrößert, sodass ein Verschieben des ersten magnetischen Elements 112 am Metallrahmen 10 erschwert wird. Dadurch kann die Stütz- bzw. Haltekraft vergrößert werden und schwerer beladene Einlegeplatten 16 gestützt werden.

Der zweite Magnet 30 dient als Abscherungssperre und verhindert, dass die Beschichtung 28 vom ersten Magneten 26 unter der Last der beladenen Einlegeplatte 16 abschert. In anderen Ausführungsformen kann eine Abscherungssperre auch dadurch bereitgestellt werden, dass ein einzelner Magnet eine Aussparung aufweist, und die Beschichtung 28 in dieser Aussparung eingebracht ist.

Andere Ausführungsformen magnetischer Elemente zum Stützen von Einlegeplatten 16 können die Beschichtung 28 lediglich mit einem Magneten umfassen, ohne dass eine Abscherungssperre vorhanden ist. Solche Ausführungsformen können denen der Figuren 9b und 9d ähneln, mit dem Unterschied, dass die Beschichtung aus einem anderen Material gebildet ist und eine andere Funktion hat.

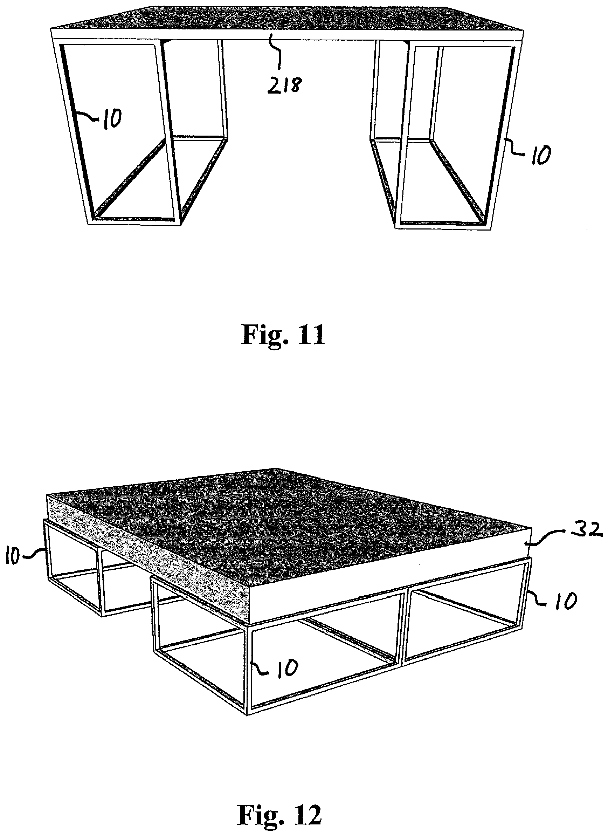

Fig. 11 zeigt ein modulares System gemäß einer weiteren erfindungsgemäßen Ausführungsform, die zwei Metallrahmen 10 und eine rechteckige Platte 218 umfasst, die als Tischplatte verwendet werden kann. In der dargestellten Konfiguration sind die beiden Metallrahmen beabstandet nebeneinander und jeweils hochkant aufgestellt. Die rechteckige Platte 218 liegt dabei bündig mit jeweils drei Kanten eines Metallrahmens 10 auf den Metallrahmen 10 auf. Die dargestellte Konfiguration stellt dadurch einen Tisch, beispielsweise einen Arbeits- oder Schreibtisch, zur Verfügung.

Fig. 12 zeigt ein weiteres modulares System gemäß einer anderen Ausführungsform, das vier Metallrahmen 10 umfasst und weiterhin eine Matratze 32 umfasst. In der dargestellten Konfiguration liegen die vier Metallrahmen 10 flach auf dem Boden auf, wobei jeweils zwei Metallrahmen 10 mithilfe von vier dritten magnetischen Elementen 24 (nicht gezeigt) verbunden sind. Die Matratze 32 liegt auf allen vier Metallrahmen 10 auf. In dieser Konfiguration wird ein Bett zur Verfügung gestellt.

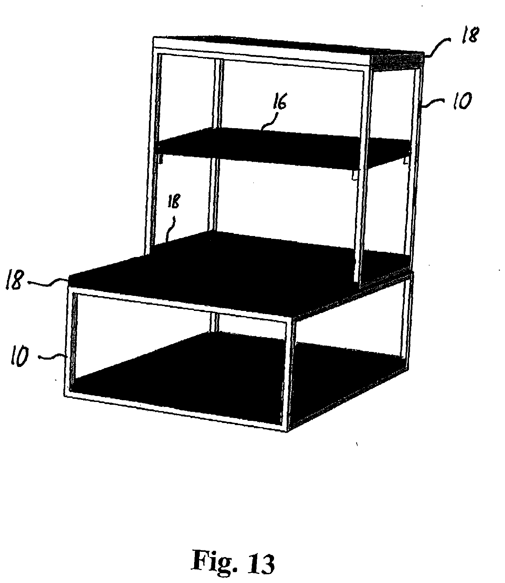

Fig. 13 zeigt einen weiteren Einrichtungsgegenstand, der mithilfe eines modularen erfindungsgemäßen Systems bereitgestellt werden kann. Der dargestellte Einrichtungsgegenstand kann als Schuhregal und zum Hinsetzen, um sich Schuhe anzuziehen, verwendet werden. Das System der Fig. 13 umfasst zwei Metallrahmen 10, die mithilfe von vier dritten magnetischen Elementen 24 (nicht gezeigt) miteinander verbunden sind. Der untere Metallrahmen 10 liegt flach auf dem Boden auf, und der obere Metallrahmen 10 ist hochkant auf den unteren Metallrahmen 10 aufgesetzt. Auf der Oberseite des oberen Metallrahmens 10 ist eine rechteckige Platte 18 angeordnet. Eine identische rechteckige Platte 18 ist auf der Oberseite des unteren Metallrahmens 10 im vorderen Bereich angeordnet, der an denjenigen Bereich angrenzt, in dem der obere Metallrahmen 10 auf den unteren Metallrahmen 10 aufgesetzt ist.

In dem System der Fig. 13 sind die beiden Metallrahmen 10 identisch. Im Beispiel der Fig. 13, beträgt die Höhe H jedes Metallrahmens das Doppelte der Tiefe T jedes Metallrahmens (gemäß der Bezeichnungen der Fig. 1). Dadurch können der obere hochkant orientierte Metallrahmen und die danebenliegende rechteckige Platte 18 fluchtend ohne Überstand auf dem unteren flach orientierten Metallrahmen 10 angeordnet werden.

Anhand der zuvor beschriebenen Ausführungsformen der Figuren 8 und 11 bis 13, ist ersichtlich, dass auch mehrere Metallrahmen 10 mithilfe von magnetischen Elementen innerhalb eines modularen Systems angeordnet und konfiguriert werden können, um unterschiedliche Einrichtungsgegenstände zur Verfügung zu stellen. Aufgrund der magnetischen Verbindungen können diese Einrichtungsgegenstände schnell und unkompliziert ineinander umgewandelt werden und auch jeweils abgewandelt werden, beispielsweise durch Höhenverstellung einer Einlegeplatte 16.

Man beachte, dass die Ausführungsformen der Figuren 11 und 12 magnetische Elemente, die als Füße dienen, oder zum Verbinden der Metallrahmen 10 oder zum Stützen einer höhenverstellbaren Einlegeplatte darin nicht nochmals zeigen. Die Ausführungsformen der Figuren 11 und 12 sollen beitragen, die Vielseitigkeit und umfangreiche Einsetzbarkeit der Erfindung zu veranschaulichen. Magnetische Elemente zum Stützen höhenverstellbarer Einlegeplatten können jedoch in Kombination mit allen gezeigten Ausführungsformen verwendet werden. Magnetische Elemente 14 als Füße oder Bodenauflagen können in Kombination mit allen gezeigten Ausführungsformen, mit Ausnahme des Teewagens der Figur 7, verwendet werden.

Es wird darauf hingewiesen, dass mithilfe der vorliegenden Erfindung auch weitere Einrichtungsgegenstände bereitgestellt werden können, die mehr Metallrahmen umfassen. Es wird auch darauf hingewiesen, dass die Metallrahmen nicht notwendigerweise identisch sein müssen, sondern voneinander abweichende Abmessungen aufweisen können. In vorteilhaften Ausführungsformen sind eine oder mehrere Abmessungen der unterschiedlichen Metallrahmen des Systems Vielfache einer bestimmten Länge. Dadurch ist es möglich, die Metallrahmen in unterschiedlichen Konfigurationen bündig zueinander anzuordnen und besser zu kombinieren.

Die zuvor genannten Ausführungsformen sind lediglich beispielhaft für die vorliegende Erfindung und schränken diese nicht ein. Der Schutzbereich der vorliegenden Erfindung wird allein durch die beigefügten Ansprüche bestimmt.

### BEZUGSZEICHENLISTE

- 10: Metallrahmen
- 12, 112: erste magnetische Elemente
- 14: zweite magnetische Elemente
- 16: Einlegeplatte
- 18, 118, 218: rechteckige Platte
- 20: integrierte Magneten
- 22: Rollen
- 24: dritte magnetische Elemente
- 26: erster Magnet
- 28: Beschichtung
- 30: zweiter Magnet
- 32: Matratze

## Patentansprüche

1. Konstruktionseinheit zur Bereitstellung von flexibel gestaltbaren Einrichtungsgegenständen und/oder zur Bereitstellung unterschiedlicher Einrichtungsgegenstände, umfassend
- einen Metallrahmen (10) mit Stababschnitten, die die Kanten eines Quaders bilden,
- vier oder mehr magnetische Elemente (12, 112, 14, 24), die jeweils mit dem Metallrahmen (10) magnetisch verbindbar sind, wobei die magnetischen Elemente (12, 112, 14, 24) stufenlos am Metallrahmen verschiebbar sind,
**dadurch gekennzeichnet, dass** die Konstruktionseinheit weiterhin eine oder mehrere Platten (16) umfasst, die jeweils so bemessen sind, dass sie jeweils parallel zu mindestens einer der drei Seitenebenen des Quaders in den Metallrahmen (10) eingebracht werden können und jeweils mithilfe von mindestens vier der magnetischen Elemente (12, 112, 14, 24), wenn diese an entsprechenden Positionen jeweils mit einem der Stababschnitte magnetisch verbunden sind, gegen die Schwerkraft gestützt werden können.

2. Konstruktionseinheit nach Anspruch 1, bei der die Stababschnitte des Metallrahmens (10) ein Metallprofil, insbesondere ein Stahlprofil, umfassen oder daraus gebildet sind und/oder bei dem die Stababschnitte des Metallrahmens (10) durch ein Vierkantprofil gebildet werden, und/oder
bei der der Metallrahmen (10) aus den Stababschnitten gebildet ist und/oder die Stababschnitte starr miteinander verbunden sind.

3. Konstruktionseinheit nach Anspruch 1 oder 2, bei der eine Tiefe (T) des Metallrahmens (10) im Bereich von 16 cm bis 60 cm, vorzugsweise im Bereich von 24 cm bis 50 cm, insbesondere im Bereich von 30 cm bis 42 cm liegt und/oder
bei der eine Breite (B) des Metallrahmens (10) im Bereich von 34 cm bis 150 cm, vorzugsweise im Bereich von 50 cm bis 115 cm, insbesondere im Bereich von 64 cm bis 80 cm liegt und/oder
bei der eine Höhe (H) des Metallrahmens (10) im Bereich von 34 cm bis 160 cm, vorzugsweise im Bereich von 52 cm bis 125 cm, insbesondere im Bereich von 70 cm bis 86 cm liegt.

4. Konstruktionseinheit nach einem der vorhergehenden Ansprüche, bei der eine Breite (B) des Metallrahmens (10) das Zweifache einer Tiefe (T) des Metallrahmens (10) beträgt, und/oder
bei der eine Breite (B) und/oder eine Höhe (H) des Metallrahmens (10) jeweils ein ganzzahliges Vielfaches der Hälfte einer Tiefe (T) des Metallrahmens (10) betragen.

5. Konstruktionseinheit nach einem der vorhergehenden Ansprüche, bei dem die magnetischen Elemente (12, 112, 14, 24) jeweils einen oder mehrere Magneten, vorzugsweise Neodym-Magneten, umfassen oder jeweils aus einem oder mehreren Magneten, vorzugsweise aus einem oder mehreren Neodym-Magneten, bestehen.

6. Konstruktionseinheit nach einem der vorhergehenden Ansprüche, bei dem mindestens vier der vier oder mehr magnetischen Elemente (12, 112, 14, 24) jeweils einen Magneten mit einer Dicke in einem Bereich von 3 mm bis 20 mm, vorzugsweise mit einer Dicke von 4 mm bis 10 mm, umfassen oder daraus bestehen, und/oder bei dem mindestens vier der vier oder mehr magnetischen Elemente (12, 112, 14, 24) jeweils einen Magneten mit einer Dicke in einem Bereich von 3 mm bis 20 mm, vorzugsweise mit einer Dicke von 4 mm bis 7 mm, umfassen oder aus diesem bestehen.

7. Konstruktionseinheit nach einem der vorhergehenden Ansprüche, bei dem eine Breite und/oder eine Tiefe der magnetischen Elemente einer Querabmessung eines oder mehrerer der Stababschnitte entspricht.

8. Konstruktionseinheit nach einem der vorhergehenden Ansprüche, bei der mindestens vier der magnetischen Elemente (12, 112, 14, 24) eine erste Beschichtung (28) aufweisen, die ein verschieben am Metallrahmen (10) erschwert, wobei die erste Beschichtung (28) vorzugsweise durch Kautschuk und/oder Gummiabschnitte gebildet wird, und/oder bei der mindestens vier der magnetischen Elemente (12, 112, 14, 24) eine zweite Beschichtung aufweisen, die geeignet ist ein Zerkratzen zu verhindern oder zu reduzieren, wobei die zweite Beschichtung vorzugsweise durch Filz- und/oder Korkabschnitte gebildet wird.

9. Konstruktionseinheit nach Anspruch 8, bei der die genannten mindestens vier der magnetischen Elemente (12, 112, 14, 24) mit der ersten Beschichtung (28) weiterhin eine seitlich an die erste Beschichtung (28) angrenzende Abscherungs-Sperre (30) umfassen, die vorzugsweise durch einen weiteren Magneten (30) gebildet wird.

10. Konstruktionseinheit nach einem der vorhergehenden Ansprüche, die weiterhin eine rechteckige Platte (18, 118) mit der Fläche in der Größe einer Seitenfläche des durch den Metallrahmen (10) gebildeten Quaders umfasst, wobei Magnete (20) an solchen Positionen in die Platte (18, 118) integriert sind, dass die Platte (18, 118) magnetisch am Metallrahmen (10) befestigt ist, wenn die Platte (18, 118) an der genannten Seitenfläche anliegt und mit dieser fluchtet.

11. Konstruktionseinheit nach einem der vorhergehenden Ansprüche, die weiterhin Rollen (22) umfasst, die magnetisch an dem Metallrahmen (10) angebracht werden können und die geeignet sind, die Konstruktionseinheit über ein Rollen zu bewegen.

12. Modulares flexibel gestaltbares System, umfassend
- eine Konstruktionseinheit nach einem der vorhergehenden Ansprüche,
- ein oder mehrere weitere Metallrahmen (10) mit jeweiligen Stababschnitten, die jeweils die Kanten jeweiliger Quader bilden, wobei die Metallrahmen (10) des Systems jeweils eine Breite (B), eine Höhe (H) und/oder eine Tiefe (T) haben, die jeweils ein ganzzahliges Vielfaches der Hälfte der Tiefe (T) eines der Metallrahmen (10) betragen.

13. Modulares flexibel gestaltbares System nach Anspruch 12, bei dem die Metallrahmen (10) dieselben Abmessungen aufweisen.

14. Verwendung einer Konstruktionseinheit nach einem der Ansprüche 1 bis 11 oder eines Systems nach Anspruch 12 oder 13 als Einrichtungsgegenstand, wobei mindestens vier der magnetischen Elemente (12, 112, 14, 24) verwendet werden, um eine Platte (16) innerhalb eines der Metallrahmen (10) zu stützen, die über ein verschieben der stützenden magnetischen Elemente stufenlos höhenverstellbar ist, und/oder wobei mindestens vier der magnetischen Elemente (12, 112, 14, 24) verwendet werden, um zwei der Metallrahmen (10) trennbar miteinander zu verbinden, wobei die Metallrahmen (10), wenn sie verbunden sind, stufenlos gegeneinander verschoben werden können.

## Claims

1. A construction unit for providing flexibly designable furniture items and/or for providing various furniture items, comprising
- a metal frame (10) with rod sections, which form the edges of a rectangular solid,
- four or more magnetic elements (12, 112, 14, 24), which are each magnetically connectable to the metal frame (10), the magnetic elements (12, 112, 14, 24) being continuously adjustable on the metal frame,
**characterized in that** the construction unit further comprises one or more panels (16), which are each dimensioned such that they can each be inserted into the metal frame (10) parallel to at least one of the three lateral planes of the rectangular solid and can each be supported against gravity with the aid of at least four of the magnetic elements (12, 112, 14, 24) when these elements are each magnetically connected at suitable positions to one of the rod sections.

2. The construction unit according to Claim 1, in which the rod sections of the metal frame (10) comprise or are formed from a metal profile, in particular a steel profile, and/or wherein the rod sections of the metal frame (10) are formed by a rectangular profile, and/or
in which the metal frame (10) is formed from the rod sections and/or the rod sections are rigidly interconnected.

3. The construction unit according to Claim 1 or 2, in which a depth (T) of the metal frame (10) is in the range of 16 cm to 60 cm, preferably in the range of 24 cm to 50 cm, in particular in the range of 30 cm to 42 cm and/or
in which a width (B) of the metal frame (10) is in the range of 34 cm to 150 cm, preferably in the range of 50 cm to 115 cm, in particular in the range of 64 cm to 80 cm and/or
in which a height (H) of the metal frame (10) is in the range of 34 cm to 160 cm, preferably in the range of 52 cm to 125 cm, in particular in the range of 70 cm to 86 cm.

4. The construction unit according to any one of the preceding claims, in which a width (B) of the metal frame (10) is twice a depth (T) of the metal frame (10), and/or
in which a width (B) and/or a height (H) of the metal frame (10) are each an integral multiple of half of a depth (T) of the metal frame (10).

5. The construction unit according to any one of the preceding claims, in which the magnetic elements (12, 112, 14, 24) each comprise one or more magnets, preferably neodymium magnets, or each consist of one or more magnets, preferably one or more neodymium magnets.

6. The construction unit according to any one of the preceding claims, in which at least four of the four or more magnetic elements (12, 112, 14, 24) each comprise or consist of a magnet having a thickness in a range of 3 mm to 20 mm, preferably having a thickness of 4 mm to 10 mm, and/or
in which at least four of the four or more magnetic elements (12, 112, 14, 24) each comprise or consist of a magnet having a thickness in a range of 3 mm to 20 mm, preferably having a thickness of 4 mm to 7 mm.

7. The construction unit according to any one of the preceding claims, in which a width and/or a depth of the magnetic elements correspond(s) to a transverse dimension of one or more of the rod sections.

8. The construction unit according to any one of the preceding claims, in which at least four of the magnetic elements (12, 112, 14, 24) have a first coating (28) that makes a displacement on the metal frame (10) difficult, the first coating (28) preferably being made of rubber and/or rubber sections, and/or in which at least four of the magnetic elements (12, 112, 14, 24) have a second coating that is suitable for preventing or reducing scratching, said second coating preferably being made of felt sections and/or cork sections.

9. The construction unit according to Claim 8, in which said at least four of the magnetic elements (12, 112, 14, 24) having the first coating (28) further comprise an anti-shear lock (30), which laterally abuts the first coating (28) and is preferably formed by another magnet (30).

10. The construction unit according to any one of the preceding claims, which further comprises a rectangular panel (18, 118) having an area the size of a side face of the rectangular solid formed by the metal frame (10), magnets (20) being integrated in the panel (18, 118) at positions such that said panel (18, 118) is magnetically secured to the metal frame (10) when said panel (18, 118) abuts and is flush with said side face.

11. The construction unit according to any one of the preceding claims, which further comprises rollers (22) that can be magnetically mounted on the metal frame (10) and that are suitable for moving the construction unit by rolling.

12. A flexibly designable modular system, comprising
- a construction unit according to any one of the preceding claims,
- one or several other metal frames (10) having respective rod sections, which each form the edges of respective rectangular solids, the metal frames (10) of the system each having a width (B), a height (H) and/or a depth (T) that are each an integral multiple of half of the depth (T) of one of the metal frames (10).

13. The flexibly designable modular system according to Claim 12, in which the metal frames (10) have the same dimensions.

14. Use of a construction unit according to any one of Claims 1 to 11 or of a system according to Claim 12 or 13 as a furniture item, wherein at least four of the magnetic elements (12, 112, 14, 24) are used to support a panel (16) within one of the metal frames (10), which panel is continuously adjustable in height by sliding the supporting magnetic elements, and/or wherein at least four of the magnetic elements (12, 112, 14, 24) are used to interconnect two of the metal frames (10) in a detachable manner, the metal frames (10) being continuously adjustable relative to one another when they are connected.

## Revendications

1. Unité de construction destinée à la préparation d'objets d'ameublement pouvant être réalisés de façon flexible et/ou à la préparation d'objets d'ameublement différents, comprenant
- un cadre métallique (10) avec des tronçons de barre qui forment les arêtes d'un parallélépipède,
- quatre éléments magnétiques (12, 112, 14, 24) ou davantage qui peuvent être raccordés magnétiquement au cadre métallique (10), les éléments magnétiques (12, 112, 14, 24) pouvant coulisser en continu sur le cadre métallique,
**caractérisée en ce que**
l'unité de construction comprend en outre une ou plusieurs plaques (16) qui sont respectivement dimensionnées de telle sorte qu'elles peuvent être introduites dans le cadre métallique (10) respectivement parallèlement à au moins un des trois plans latéraux du parallélépipède et peuvent être soutenues contre la force de la gravité respectivement au moyen d'au moins quatre des éléments magnétiques (12, 112, 14, 24) quand ceux-ci sont, dans des positions correspondantes, raccordés magnétiquement respectivement à l'un des tronçons de barre.

2. Unité de construction selon la revendication 1, dans laquelle les tronçons de barre du cadre métallique (10) comprennent un profilé métallique, en particulier un profilé en acier, et/ou sont formés de celui-ci et/ou dans laquelle les tronçons de barre du cadre métallique (10) sont formés par un profilé carré, et/ou
dans laquelle le cadre métallique (10) est formé des tronçons de barre et/ou les tronçons de barre sont raccordés les uns aux autres de façon rigide.

3. Unité de construction selon la revendication 1 ou 2, dans laquelle une profondeur (T) du cadre métallique (10) se situe dans la plage de 16 cm à 60 cm, de préférence dans la plage de 24 cm à 50 cm, en particulier dans la plage de 30 cm à 42 cm, et/ou dans laquelle une largeur (B) du cadre métallique (10) se situe dans la plage de 34 cm à 150 cm, de préférence dans la plage de 50 cm à 115 cm, en particulier dans la plage de 64 cm à 80 cm, et/ou
dans laquelle une hauteur (H) du cadre métallique (10) se situe dans la plage de 34 cm à 160 cm, de préférence dans la plage de 52 cm à 125 cm, en particulier dans la plage de 70 cm à 86 cm.

4. Unité de construction selon l'une des revendications précédentes, dans laquelle une largeur (B) du cadre métallique (10) est le double d'une profondeur (T) du cadre métallique (10), et/ou
dans laquelle une largeur (B) et/ou une hauteur (H) du cadre métallique (10) sont respectivement un multiple entier de la moitié d'une profondeur (T) du cadre métallique (10).

5. Unité de construction selon l'une des revendications précédentes, dans laquelle les éléments magnétiques (12, 112, 14, 24) comprennent respectivement un ou plusieurs aimants, de préférence des aimants néodymes, ou sont respectivement composés d'un ou des plusieurs aimants, de préférence d'un ou des plusieurs aimants néodymes.

6. Unité de construction selon l'une des revendications précédentes, dans laquelle au moins quatre des quatre éléments magnétiques (12, 112, 14, 24) ou davantage comportent respectivement un aimant d'une épaisseur dans une plage de 3 mm à 20 mm, de préférence d'une épaisseur de 4 mm à 10 mm, ou se composent de celui-ci, et/ou
dans laquelle au moins quatre des quatre éléments magnétiques (12, 112, 14, 24) ou davantage comportent respectivement un aimant d'une épaisseur dans une plage de 3 mm à 20 mm, de préférence d'une épaisseur de 4 mm à 7 mm, ou se composent de celui-ci.

7. Unité de construction selon l'une des revendications précédentes, dans laquelle une largeur et/ou une profondeur des éléments magnétiques correspond à une dimension transversale d'un ou de plusieurs des tronçons de barre.

8. Unité de construction selon l'une des revendications précédentes, dans laquelle au moins quatre des éléments magnétiques (12, 112, 14, 24) comportent un premier revêtement (28) qui gêne un coulissement sur le cadre métallique (10), le premier revêtement (28) étant de préférence formé de caoutchouc et/ou de tronçons de gomme, et/ou dans laquelle au moins quatre des éléments magnétiques (12, 112, 14, 24) comportent un deuxième revêtement qui est approprié pour empêcher ou réduire les rayures, le deuxième revêtement étant de préférence formé par des tronçons de feutre et/ou de liège.

9. Unité de construction selon la revendication 8, dans laquelle lesdits au moins quatre des éléments magnétiques (12, 112, 14, 24) ayant le premier revêtement (28) comprennent en outre une barrière anti-cisaillement (30), contiguë au premier revêtement (28), qui est de préférence formée par un autre aimant (30).

10. Unité de construction selon l'une des revendications précédentes, qui comprend en outre une plaque (18, 118) rectangulaire dont la surface est de la taille d'une surface latérale du parallélépipède formé par le cadre métallique (10), des aimants (20) étant intégrés dans la plaque (18, 118) dans des positions telles que la plaque (18, 118) est fixée magnétiquement sur le cadre métallique (10) quand la plaque (18, 118) est adjacente à ladite surface latérale et affleure avec elle.

11. Unité de construction selon l'une des revendications précédentes, qui en outre comprend des rouleaux (22) qui peuvent être mis en place magnétiquement sur le cadre métallique (10) et qui sont appropriés pour déplacer l'unité de construction par roulage.

12. Système modulaire pouvant être réalisé de façon flexible, comprenant
- une unité de construction selon l'une des revendications précédentes,
- un ou plusieurs autres cadres métalliques (10) avec des tronçons de barre respectifs qui forment respectivement les arêtes de parallélépipèdes respectifs, les cadres métalliques (10) du système ayant respectivement une largeur (B), une hauteur (H) et/ou une profondeur (T) qui sont respectivement un multiple entier de la moitié de la profondeur (T) d'un des cadres métalliques (10).

13. Système modulaire pouvant être réalisé de façon flexible selon la revendication 12, dans lequel les cadres métalliques (10) présentent les mêmes dimensions.

14. Utilisation d'une unité de construction selon l'une des revendications 1 à 11 ou d'un système selon la revendication 12 ou 13 en tant qu'objets d'ameublement, au moins quatre des éléments magnétiques (12, 112, 14, 24) étant utilisés pour, à l'intérieur d'un des cadres métalliques (10), soutenir une plaque (16) qui est réglable en hauteur en continu par le biais d'un coulissement des éléments magnétiques de soutien, et/ou au moins quatre des éléments magnétiques (12, 112, 14, 24) étant utilisés pour raccorder l'un à l'autre deux des cadres métalliques (10) de façon séparable, les cadres métalliques (10) pouvant, une fois raccordés, être déplacés l'un par rapport à l'autre en continu.
